# EUROPÄISCHE PATENTANMELDUNG

(11) **EP 1 010 912 A1**
(43) Veröffentlichungstag der Anmeldung: **21.06.2000**
(21) Anmeldenummer: 99120422.3
(22) Anmeldetag: 14.10.1999
(51) Int. Cl.: F16D 48/06

(54) **Betätigungseinrichtung für eine Schaltkupplung**

(30) Priorität: 17.12.1998 DE 19858271
(71) Anmelder: WABCO GmbH & Co. OHG, 30453 Hannover (DE)
(72) Erfinder: Klatt, Alfred, 29339 Wathlingen (DE)
(74) Vertreter: Schrödter, Manfred, Dipl.-Ing.

(57) **Zusammenfassung**

Eine bekannte automatische Betätigungseinrichtung für eine Schaltkupplung sieht für den Fall, daß der Bediener die Kupplung betätigen will, eine reine Steuerung der Kupplungsbetätigung mittels der Bedienerkraft vor. Dadurch kann die Feinfühligkeit der bedienerabhängigen Kupplungsbetätigung eingeschränkt sein.

Zur Verbesserung der Feinfühligkeit der bedienerabhängigen Kupplungsbetätigung schlägt die Erfindung die Sensierung der Bedienerkraft mittels eines Bedienerkraftsensors (4) und die Zuführung des Bedienerkraftsignals zur Regeleinrichtung (2) der Betätigungseinrichtung als Sollwert für den Regelkreis vor.

Ein wichtiges Anwendungsgebiet der Erfindung sind Kraftfahrzeuge mit automatisierter Getriebeschaltung.

## Beschreibung

Die Erfindung betrifft eine Betätigungseinrichtung für eine Schaltkupplung nach dem Oberbegriff des Patentanspruchs 1.

Eine derartige Betätigungseinrichtung ist aus der EP-B-0 710 580 bekannt. Diese ermöglicht zwecks Gangwechsel in einem nachgeordneten Getriebe eine selbsttätige geregelte Kupplungsbetätigung und eine bedienerabhängige Kupplungsbetätigung.

Bei der selbsttätigen Kupplungsbetätigung regelt die Regeleinrichtung über einen elektrisch angetriebenen hydraulischen Geberzylinder und einen in den Betätigungszylinder integrierten hydraulischen Nehmerzylinder nach zugeführten Sollwertsignalen und dem zugeführten Isthubsignal den Schaltkupplungshub. Dabei wird das Isthubsignal an einer Kolbenstange des elektrisch angetriebenen Geberzylinders gewonnen. Der Hub dieser Kolbenstange steht zu dem Schaltkupplungshub in einer festen Relation. Die von dem Druck in dem Nehmerzylinder auf den Nehmerzylinderkolben ausgeübte Kraft in Löserichtung der Schaltkupplung leitet der Betätigungszylinder zu der Schaltkupplung durch. Diese Kraft ist jedoch zur Kupplungsbetätigung zu gering. Deshalb wird der Druck in dem Nehmerzylinder auch als Steuerdruck einem Proportionalventil zugeführt, welches aus einer Druckquelle einen seinem Steuerdruck proportionalen Druck in den Betätigungszylinder durchläßt, der daraufhin eine zur Betätigung der Schaltkupplung ausreichende Kraft in deren Löserichtung erzeugt.

Die bedienerabhängige Kupplungsbetätigung ist bei der bekannten Betätigungseinrichtung zur Notbetätigung der Schaltkupplung vorgesehen. Bei dieser Betätigungsart bleiben die Regeleinrichtung und der elektrisch angetriebene Geberzylinder unbeteiligt. Bei dieser Betätigungsart erzeugt der Bediener mittels eines Betätigungsorgans über einen Geberzylinder den die Kupplungsbetätigung auslösenden Druck in dem in den Betätigungszylinder integrierten Nehmerzylinder. Auch dieser Druck wird dem Proportionalventil zugeführt mit der oben beschriebenen Folge. Die in diesem Fall von dem Nehmerzylinderkolben ausgeübte Kraft kann als Bedienerkraft bezeichnet werden.

Infolge der Nichtbeteiligung der Regeleinrichtung bietet die bekannte Betätigungseinrichtung nur eine ungeregelte bedienerabhängige Kupplungsbetätigung. Dadurch kann die Feinfühligkeit der bedienerabhängigen Kupplungsbetätigung eingeschränkt sein.

Der Erfindung liegt die Aufgabe zugrunde, die Feinfühligkeit der bedienerabhängigen Kupplungsbetätigung bei einer Betätigungseinrichtung der eingangs genannten Art zu verbessern.

Diese Aufgabe wird durch die in dem Patentanspruch 1 angegebene Erfindung gelöst. Vorteilhafte Ausgestaltungen und Weiterbildungen sind in den Unteransprüchen angegeben.

Die bekannte Lösung ist auch sehr aufwendig. Die Erfindung ermöglicht eine Verringerung des Aufwands.

Die Erfindung wird nachstehend unter Nennung weiterer Vorteile anhand zeichnerisch dargestellter Ausführungsbeispiele erläutert. Unter durchgehender Verwendung gleicher Bezugszeichen für funktionsgleiche Komponenten zeigen
- Fig. 1: schematisch eine Betätigungseinrichtung für eine Schaltkupplung,
- Fig. 2: schematisch eine andere Ausgestaltung der Betätigungseinrichtung nach Fig. 1.

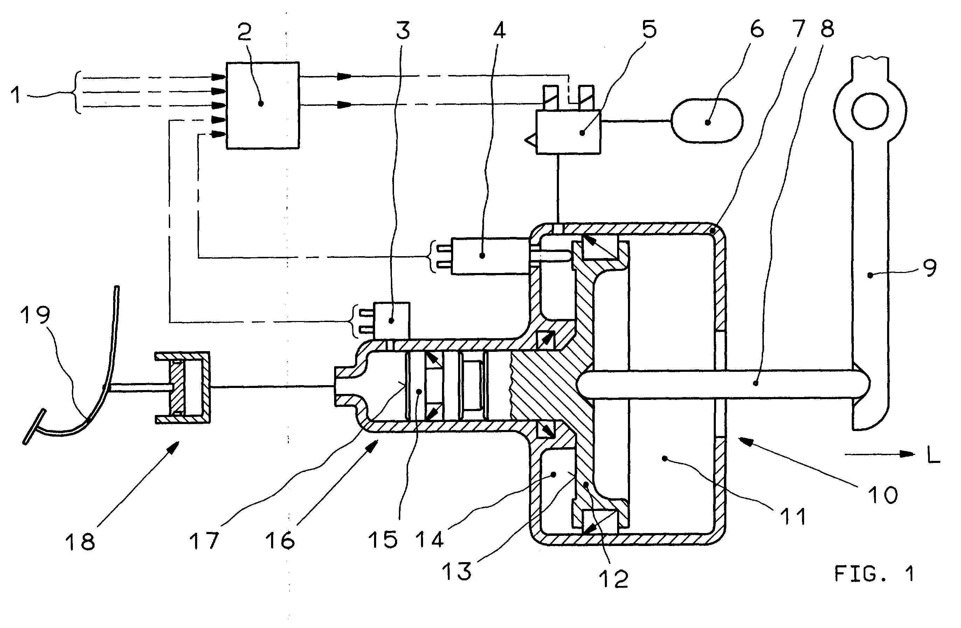

Die in Fig. 1 dargestellte Betätigungseinrichtung für eine Schaltkupplung setzt sich zusammen aus einer selbsttätigen Betätigungseinrichtung und einer bedienerabhängigen Betätigungseinrichtung, die, wie weiter unten näher ausgeführt wird, weitgehend gemeinsame Komponenten verwenden.

Die wesentlichen Komponenten der selbsttätigen Betätigungseinrichtung sind ein Betätigungszylinder (10), eine Regeleinrichtung (2), Signalgeber, eine elektrische betätigte Ventileinrichtung (5) und eine Druckquelle (6). Von den Signalgebern ist nur ein an dem Betätigungszylinder (10) angeordneter Hubsensor (4) dargestellt, welcher der Regeleinrichtung (2) ein den jeweiligen Schaltkupplungshub abbildendes Isthubsignal zuführt. Der Regeleinrichtung (2) Sollwertsignale zuführende Sollwert-Signalgeber sind nicht dargestellt.

Der Betätigungszylinder (10) weist ein Zylindergehäuse (7) und einen darin abgedichtet verschiebbar geführten Betätigungskolben (12) auf. Der Betätigungskolben (12) teilt einen Innenraum des Zylindergehäuses (7) in eine Druckkammer (14) und eine Atmosphärenkammer (11) auf. Die Druckkammer (14) begrenzt der Betätigungskolben (12) durch eine Wirkfläche (13).

Auf seiner der Atmosphärenkammer (11) zugewandten Seite steht der Betätigungskolben (12) über einen Stößel (8) mit einem Ende eines nur teilweise dargestellten Kupplungshebels (9) im Eingriff. Der Kupplungshebel (9) steht in bekannter Weise mit einer nicht dargestellten Schaltkupplung derart im Eingriff, daß eine Bewegung seines dem Stößel (8) zugeordneten Endes einen Schaltkupplungshub auslöst. Ein Pfeil (L) gibt die Löserichtung der Schaltkupplung an. Der Hubsensor (4) erfaßt den Hub des Betätigungskolbens (12) als Maß für den Schaltkupplungshub. Der Hubsensor (4) kann auch an einer anderen geeigneten Stelle, beispielsweise am Kupplungshebel (9) angeordnet sein.

Eingänge der Regeleinrichtung (2) sind, wie durch hineingehende Pfeilspitzen der zugeordneten Zuleitungen angedeutet ist, mit den Sollwert-Signalgebern und dem Hubsensor (4) verbunden, welche die für die selbsttätige Kupplungsbetätigung relevanten Signale erzeugen. Die den Sollwert-Signalgebern zugeordneten Zuleitungen sind als Gruppe mit (1) bezeichnet. Ausgänge der Regeleinrichtung (2) sind, wie durch Leitungen mit abgehenden Pfeilen angedeutet ist, mit elektrischen Betätigungseinrichtungen der Ventileinrichtung (5) verbunden. Häufig wird die Regeleinrichtung (2) noch die Signale weiterer Signalgeber erfassen und Signale für weitere Funktionen ausgeben, beispielsweise zur Getriebeschaltung.

Die Ventileinrichtung (5) ist in Strömungswegen zwischen der Druckkammer (14) und der Druckquelle (6) bzw. der Druckkammer (14) und der Atmosphäre angeordnet, sie verbindet, je nach Ansteuerung durch die Regeleinrichtung (2), die Druckkammer (14) mit der Druckquelle (6) oder der Atmosphäre oder unterbricht beide Verbindungen. Die selbsttätige Betätigungseinrichtung ist also für Luft als Druckmittel ausgelegt, kann aber auch mit dem Fachmann geläufigen Maßnahmen an andere Druckmittel, beispielsweise hydraulische, angepaßt werden. Die Ventileinrichtung (5) kann von jeder die geforderten Funktionen sicherstellenden Bauart sein. In Betracht kommt beispielsweise die in der US 5676229 beschriebene Ventileinrichtung. Baulich kann die Ventileinrichtung (5) in den Betätigungszylinder (10) integriert sein.

Die Fig. 1 stellt die Betätigungseinrichtung im Ruhezustand dar, d. h. bei unbetätigter (eingekuppelter) Schaltkupplung. In diesem Zustand verbindet die Ventileinrichtung (5) die Druckkammer (14) mit der Atmosphäre, so daß Rückstellkräfte der Schaltkupplung über den Kupplungshebel (9) und den Stößel (8) den Betätigungskolben (12) entgegen der Löserichtung (11) in seine dargestellte Ruhelage schieben können.

Erkennt die Regeleinrichtung (2) mittels ihrer elektronischen Bestückung und/oder ihrer Programmierung anhand der zugeführten Sollwertsignale eine Forderung nach Betätigung der Schaltkupplung, so gibt sie Betätigungssignale an die Ventileinrichtung (5), aufgrund derer diese aus der Druckquelle (6) Druck in die Druckkammer (14) durchläßt und diesen Druck so einstellt bzw. hält, daß das Isthubsignal einen den Sollwertsignalen genügenden Schaltkupplungshub anzeigt. Erkennt die Regeleinrichtung (2) eine Forderung nach einem Schaltkupplungs-Rückhub, so steuert sie die Ventileinrichtung (5) zur Einstellung bzw. zum Halten zum entsprechenden Druckabbau bzw. Halten eines entsprechend abgesenkten Drucks an.

Die bedienerabhängige Betätigungseinrichtung besteht aus einem Betätigungsorgan (19), einer hydraulischen Übertragungskette (16, 18), dem Betätigungszylinder (10), der Regeleinrichtung (2), dem Hubsensor (4), einem Bedienerkraftsensor (3), der Ventileinrichtung (5) und der Druckquelle (6).

Die hydraulische Übertragungskette besteht aus einem Geberzylinder (18) und einem Nehmerzylinder (16). Letzterer ist in den Betätigungszylinder (10) derart integriert, daß der Nehmerzylinderkolben (15) mit dem Betätigungskolben (12) in Reihe angeordnet ist.

Das Betätigungsorgan (19) ist als Pedal dargestellt, kann aber auf jede andere geeignete Art ausgebildet sein. Wirkt der Bediener mit einer Betätigungskraft auf das Betätigungsorgan (19) ein, so wird dadurch in dem Nehmerzylinder (18) ein entsprechender Druck erzeugt und in den Geberzylinder (16) übertragen. Die von diesem Druck auf der Wirkfläche (17) des Nehmerzylinderkolbens (15) erzeugte Bedienerkraft überträgt der Nehmerzylinderkolben (15) auf den Betätigungskolben (12), und dieser leitet diese Kraft über den Stößel (8) auf den Kupplungshebel (9) und damit zu der Schaltkupplung durch. Die Richtung der Bedienerkraft ist die Löserichtung (L).

Die von dem Betätigungskolben (12) zu der Schaltkupplung durchgeleitete Bedienerkraft reicht nicht aus, die Schaltkupplung zu betätigen, liefert dem Bediener aber eine Rückmeldung über die von ihm aufgewandte Betätigungskraft.

Der Bedienerkraftsensor (3) ist als Drucksensor ausgebildet und am Nehmerzylinder (15) angeordnet, so daß er die Bedienerkraft in Form des diese Bedienerkraft erzeugenden Druckes erfaßt.

Die Regeleinrichtung (2) ist durch geeignete Bestückung und/oder Programmierung so ausgebildet, daß sie auf die Zuführung eines Bedienerkraftsignals so reagiert, als seien ihr nur über die Zuleitungen (1) Sollwertsignale zugeführt worden. Das heißt, daß sie mittels der Ventileinrichtung (5) als Stellglied und dem Druck in der Druckkammer (14) als Stellgröße den Schaltkupplungshub nach dem Wert des Bedienerkraftsignals regelt.

Setzt der Bediener die bedienerabhängige Betätigungseinrichtung ein, wenn gerade eine selbsttätige Kupplungsbetätigung abläuft, so löst die Regeleinrichtung (2) die über die Zuleitungen (1) zugeführten Sollwertsignale durch das Bedienerkraftsignal ab. Die Regeleinrichtung (2) kann so fortgebildet sein, daß sie diese Ablösung gleitend vornimmt, so daß keine Unstetigkeiten bei der Kupplungsbetätigung auftreten.

Setzt der Bediener die bedienerabhängige Betätigungseinrichtung ein, während die Betätigungseinrichtung und die Schaltkupplung sich im Ruhezustand befinden, so reagiert die Regeleinrichtung (2) auf das Bedienersignal von Anfang an wie auf zugeführte Sollwertsignale.

Bei der beschriebenen Betätigungseinrichtung ist also der für die selbsttätige Betätigungseinrichtung vorgesehene Regelkreis in die bedienerabhängige Kupplungsbetätigung eingebunden. Deshalb ermöglicht diese Betätigungseinrichtung eine sehr feinfühlige Kupplungsbetätigung durch die bedienerabhängige Betätigungseinrichtung.

Die bedienerabhängige Betätigungseinrichtung ermöglicht dem Bediener eine Notbetätigung im Falle einer Störung im Bereich der Sollwertsensoren und/oder in den diesen zugeordneten Teilen der Regeleinrichtung (2), aber auch eine Betätigung der Schaltkupplung nur nach seinem Willen, beispielsweise bei schwierigen Manövern.

Die Steuereinrichtung (2) kann so ausgebildet sein, daß sie jedem Wert des Bedienerkraftsignals einen Schaltkupplungshub zuordnet. Darüber hinaus kann die Regeleinrichtung (2) so ausgebildet sein, daß der Schaltkupplungshub eine lineare Funktion des Bedienerkraftsignals ist, daß also mittels eines Faktors zwischen beiden Größen eine Proportionalität besteht.

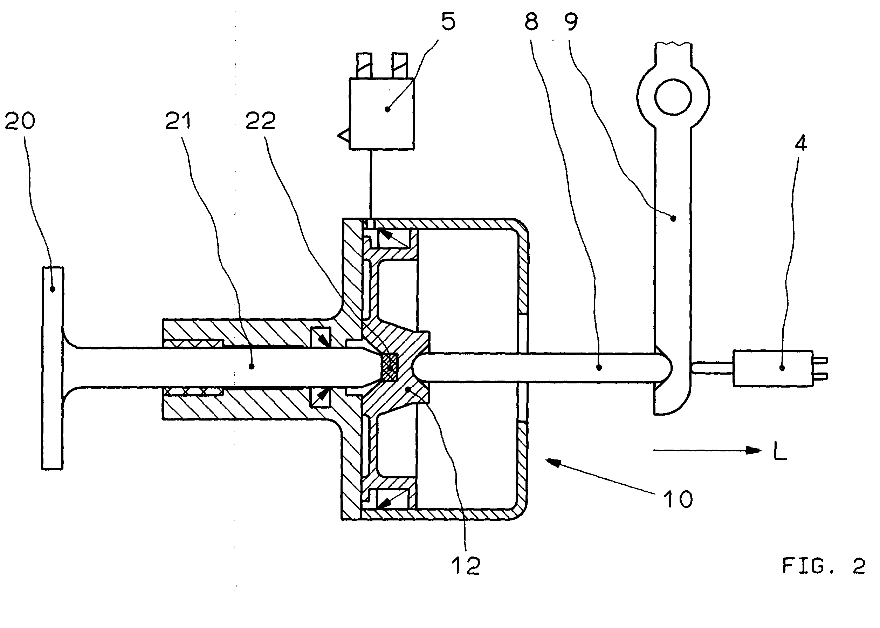

Bei der in Fig. 2 ausschnittsweise dargestellten Betätigungseinrichtung sind die hydraulische Übertragungskette (16, 18) und der als Bedienerkraftsensor (3) eingesetzte Drucksensor durch mechanische Mittel (20, 21) und einen als echter Kraftsensor ausgebildeten Bedienerkraftsensor (22) ersetzt. Die mechanischen Mittel (20, 21) bestehen aus einer Schubstange (21) und einer daran angeformten Trittfläche (20). In diesem Fall wird die von dem Bediener auf die Trittfläche (20) aufgebrachte Betätigungskraft direkt als Bedienerkraft auf den Betätigungskolben (12) übertragen. Der im Kraftfluß dieser Kraft angeordnete Bedienerkraftsensor (22) liefert das Bedienerkraftsignal.

Die dargestellten mechanischen Mittel mit Schubstange (21) und Trittfläche (20) stellen eine besonders einfache Ausführungsform möglicher mechanischer Mittel dar. Beispielsweise könnten die mechanischen Mittel auch aus einem Pedal und einem Übertragungsgestänge bestehen, in welchem Falle zwischen der vom Bediener aufgebrachten Betätigungskraft und der Bedienerkraft ein Übersetzungsverhältnis bestünde.

Der Hubsensor (4) ist in diesem Ausführungsbeispiel nicht an dem Betätigungszylinder (10), sondern an dem Kupplungshebel (9) angeordnet.

Der Bedienerkraftsensor könnte in nicht dargestellter Weise auch an anderer Stelle angeordnet sein, beispielsweise dort, wo der Bediener unmittelbar einwirkt, z. B. an der Trittfläche (20) oder an der Angriffsfläche des etwa vorhandenen Betätigungsorgans.

Im übrigen gelten die vorstehend zu einem Ausführungsbeispiel gemachten Ausführungen für das andere Ausführungsbeispiel direkt oder in entsprechender Anwendung mit, sofern sich aus diesen Ausführungen nichts Widersprechendes ergibt. Beispielsweise könnte der Bedienerkraftsensor in Fig. 1 auch als echter Kraftsensor zwischen dem Nehmerzylinderkolben (15) und dem Betätigungskolben (12) oder an der Einwirkungsstelle des Bedieners angeordnet sein.

Schließlich erkennt der Fachmann, daß die Ausführungsbeispiele den Schutzbereich der Erfindung nicht erschöpfend beschreiben, sondern daß dieser vielmehr alle Ausgestaltungen erfaßt, deren Merkmale sich den Patentansprüchen unterordnen.

## Patentansprüche

1. Betätigungseinrichtung für eine Schaltkupplung mit den Merkmalen:
a) es ist ein Betätigungszylinder (10) vorgesehen;
b) der Betätigungszylinder (10) erzeugt bei Druckzufuhr eine Kraft in Löserichtung (L) der Schaltkupplung;
c) es ist eine Regeleinrichtung (2) vorgesehen;
d) der Regeleinrichtung (2) sind Sollwertsignale und ein den jeweiligen Schaltkupplungshub abbildendes Isthubsignal zuführbar;
e) die Regeleinrichtung (2) regelt den Schaltkupplungshub nach den zugeführten Sollwert- und Isthubsignalen mittels des dem Betätigungszylinder (10) zugeführten Drucks,
gekennzeichnet durch
einen eine Bedienerkraft erfassenden Bedienerkraftsensor (4; 22), dessen Bedienerkraftsignal der Regeleinrichtung (2) zugeführt und von dieser mit Vorrang gegenüber den anderen Sollwertsignalen als Sollwertsignal für die Schaltkupplungshub-Regelung verarbeitet wird.

2. Betätigungseinrichtung nach Anspruch 1,
dadurch gekennzeichnet,
daß die Bedienerkraft dem Betätigungszylinder (10) über eine hydraulische Druckübertragungskette (16, 18) zugeführt wird.

3. Betätigungseinrichtung nach Anspruch 1,
dadurch gekennzeichnet,
daß die Bedienerkraft dem Betätigungszylinder (10) über mechanische Mittel (20, 21) zugeführt wird.

4. Betätigungseinrichtung nach Anspruch 2,
dadurch gekennzeichnet,
daß der Bedienerkraftsensor (4) als den Druck in der Druckübertragungskette (16, 18) erfassender Drucksensor ausgebildet und angeordnet ist.

5. Betätigungseinrichtung nach Anspruch 1,
dadurch gekennzeichnet,
daß jedem Wert des Bedienerkraftsignals ein Schaltkupplungshub zugeordnet ist.

6. Betätigungseinrichtung nach Anspruch 5,
dadurch gekennzeichnet,
daß der Schaltkupplungshub eine lineare Funktion des Bedienerkraftsignals ist.
